# EUROPEAN PATENT SPECIFICATION

(11) **EP 1 495 357 B1**
(45) Date of publication and mention of the grant of the patent: **30.10.2013**
(21) Application number: 03745648.0
(22) Date of filing: 28.03.2003
(51) Int. Cl.: G01N 21/956, G02B 27/46

(54) **UV compatible programmable spatial filter**
UV-kompatibles programmierbares räumliches Filter
Filtre spatial programmable compatible aux rayons UV

(30) Priority: 28.03.2002 US 368641 P; 28.03.2002 US 368607 P; 04.06.2002 US 163762; 04.06.2002 US 163398
(43) Date of publication of application: 12.01.2005
(73) Proprietor: KLA-Tencor Technologies Corporation, San Jose, CA 95134 (US)
(72) Inventor: WILK, Dieter, E., San Jose, CA 95125 (US); TANG, Anlun, Pleasanton, CA 94566 (US); VELLA, Eric, N., Mountain View, CA 94043 (US); RUNYON, Rex, Fremont, CA 94539 (US); SULLIVAN, Jamie, M., Sunnyvale, CA 94086 (US); JOHNSON, Ralph, T., Los Gatos, CA 95033 (US)
(74) Representative: Lukaszyk, Szymon
(86) International application number: PCT/US2003/009537
(87) International publication number: WO 2003/083560

(56) References cited:
- US-A- 5 276 498
- US-A- 5 276 498
- US-A- 5 463 491
- US-A- 5 691 795

## Description

The present invention relates generally to optical inspection systems for detecting defects on a sample. More specifically, it relates to mechanisms for filtering noise from the detection of defects within such optical systems.

Many instruments currently available for detecting small particles on wafers, reticles, photo masks, flat planes and other specimens use darkfield imaging. Under darkfield imaging, flat, specular areas scatter very little signal back at the detector, resulting in a dark image, hence the term dark field. Surface features and objects that protrude above the surface scatter more light back to the detector. In darkfield imaging, the image is normally dark except areas where particles or circuit features exist. A darkfield particle detection system can be built based on the assumption that particles scatter more light than circuit features.

In darkfield type optical inspection systems, an intense light beam in the visible wavelength range is directed towards a sample. Light scattered from the sample in response to such incident beam is then collected by a detector. The detector generates an image of the sample from the scattered light. Since defects, such as particles or voids, cause the incident light to scatter, scattered light may indicate the presence of such a defect. However, other features of the sample that are not defects may cause the incident beam to scatter resulting in the detection of "false" or "nuisance" defects. For example, repeating patterns on the sample, which are typically present on a semiconductor device, cause incident light to scatter so that sharp bright spots are imaged on the detector. These sharp bright spots may obscure actual defects. Additionally, line features at specific angles on a sample may result in scattering in broad regions of the image at specific angles, e.g., 45° and 90°, which also obscures detection of "real defects."

There are instruments that address some aspects of the "nuisance defect" problems associated with darkfield. One method in use today to enhance the detection of particles is spatial filtering. Under plane wave illumination, the intensity distribution at the back focal plane of a lens is proportional to the Fourier transform of the object. Further, for a repeating pattern, the Fourier transform consists of an array of light dots. By placing a filter in the back focal plane of the lens which blocks out the repeating dots, the repeating circuit pattern can be filtered out and leave only non-repeating signals from particles and other defects under certain ideal conditions.

Although conventional Liquid Crystal type spatial filters work well within inspection systems that operate in the visible light range, they fail to effectively inhibit light in the ultraviolet (UV) region from nuisance sources from reaching the detectors. A UV light source may be used for a number of reasons, e.g., to effectively detect smaller sized defects. However, a conventional spatial filter's extinction capability is greatly reduced when going from a visible to an UV light source. Additionally, a conventional spatial filter fails to effectively transmit scattered light in the UV region. In a specific example, a conventional PSF has an extinction value of 200:1 and a transmission value of 20 percent at the UV wavelength of 364 nm. It should be noted that the extinction ratios described herein are measured with a detector that is at a distance of 25cm (10 inches) from the filter and has an aperture of 1 cm. Finally, both the transmission and extinction performance of conventional spatial filters degrade over time under UV light exposure.

Accordingly, there is a need for an improved liquid crystal type programmable spatial filter for use in a darkfield optical inspection system that has improved extinction and transmission performance in the UV region.

US-5276498 discloses an adaptive spatial filter for surface inspection. The filter comprises a planar array of individually addressable light valves, with valves having a stripe geometry corresponding to positions of members of a diffraction pattern in an imaged Fourier plane. The valves block light from the members of the diffraction pattern. The remaining valve stripes are open for transmission of light. Light directed onto the surface of samples such as semiconductor wafers form elongated curved diffraction orders from repetitive patterns of circuit features, which are transformed to linear orders by a Fourier transform lens. The linear diffraction orders from repetitive patterns of circuit features are blocked, while light from non-repetitive features, such as dirt particles or defects, is allowed to pass through the light valves to a detector.

Accordingly, mechanisms are provided for selectively filtering spatial portions of light emanating from a sample under inspection within an optical system.

According to a first embodiment there is provided an optical inspection system for detecting anomalies on a sample, comprising a light source for directing an incident light beam onto a sample; a programmable spatial filter (PSF) arranged in a path of light emanating from the sample in response to the incident light beam, the PSF being constructed from materials arranged to inhibit at least a first portion of the emanating light with a minimum extinction value of about 400:1 and transmit at least at least a second portion of the emanating light with a minimum transmission value of about 40 percent for an incident light beam having a wavelength between about 340 nanometres and about 400 nanometres; a detector arranged within the path of the emanating light so that the second portion of the emanating light that is transmitted by the PSF impinges on the detector to thereby form an image of at least a portion of the sample and an analyzer for receiving the image and determining whether there are any defects present on the sample portion by analyzing the received image; wherein the PSF comprises a pair of plates formed from a first material that substantially transmits UV light, layers of a second material forming one or more portions deposed on each at the pair of plates, said second material being conductive and transmits UV light, and a third material between the layers of the second material that is selectively configurable to provide UV compatible transmission and opacity performance, each of the portions of the layers of the second material being coupled to a mechanism for selectively applying a voltage potential, such that when a predetermined voltage difference is applied across the third material between portions of the second material, the third material becomes opaque or transparent.

According to a second embodiment there is provided a method for detecting anomalies on a sample, the method comprising: directing an incident light beam onto a sample, the incident light beam having a wavelength between about 340 nanometres and about 400 nanometres; selectively inhibiting at least one spatial portion of an emanating light beam, which results from the incident light beam hitting the sample, from reaching a detecting positioned within an image plane of such emanating light beam, the inhibition being accomplished by configuring a programmable spatial filter (PSF) and transmitting one or more second spatial portion(s) of the emanating light beam through the PSF to the detector; wherein the first spatial portion(s) have a minimum extinction value of about 500:1 and the second spatial portion(s) have a minimum transmission value of about 50 percent.

In one embodiment, a programmable spatial filter (PSF) is constructed from materials that are compatible with light in a portion of the UV wavelength range. In a specific implementation, the PSF is constructed from a UV compatible material, such as a polymer stabilized liquid crystal material. In a further aspect, the PSF also includes a pair of plates that are formed from a UV grade glass. The PSF may also include a relatively thin first and second ITO layer that results in a sheet resistance between about 100 and about 300 Ω per square.

Most preferably, the PSF has a minimum extinction value of 500:1 and a minimum transmission value of 50 percent for the same wavelength.

These and other features and advantages of the present invention will be presented in more detail in the following specification of the invention and the accompanying figures which illustrate by way of example the principles of the invention.
Figure 1 is a simplified diagrammatic illustration of the darkfield optical inspection system in accordance with one embodiment of the present invention.
Figures 2A and 2B illustrate a side view and a top view, respectively, of the programmable spatial filter of Figure 1 in accordance with one embodiment of the present invention.
Figure 3 is an illustration of a segmented ITO layer of a programmable spatial filter in accordance with an alternative embodiment of the present invention.
Figures 4A and 4B illustrate a perspective view and a top view, respectively, of a first and second ITO layer of a programmable spatial filter in accordance with a two dimensional embodiment of the present invention.
Figure 5 is a graph of transmission as a function of the voltage applied between any of the intersections of the ITO layer of Figure 4A and 4B in accordance with one embodiment of the present invention.
Figure 6 illustrates an example of scattered light from a sample as a function of the x direction.

Reference will now be made in detail to a specific embodiment of the invention. An example of this embodiment is illustrated in the accompanying drawings. While the invention will be described in conjunction with this specific embodiment, it will be understood that it is not intended to limit the invention to one embodiment. On the contrary, it is intended to cover alternatives, modifications, and equivalents as may be included within the scope of the invention as defined by the appended claims. In the following description, numerous specific details are set forth in order to provide a thorough understanding of the present invention. The present invention may be practiced without some or all of these specific details. In other instances, well known process operations have not been described in detail in order not to unnecessarily obscure the present invention.

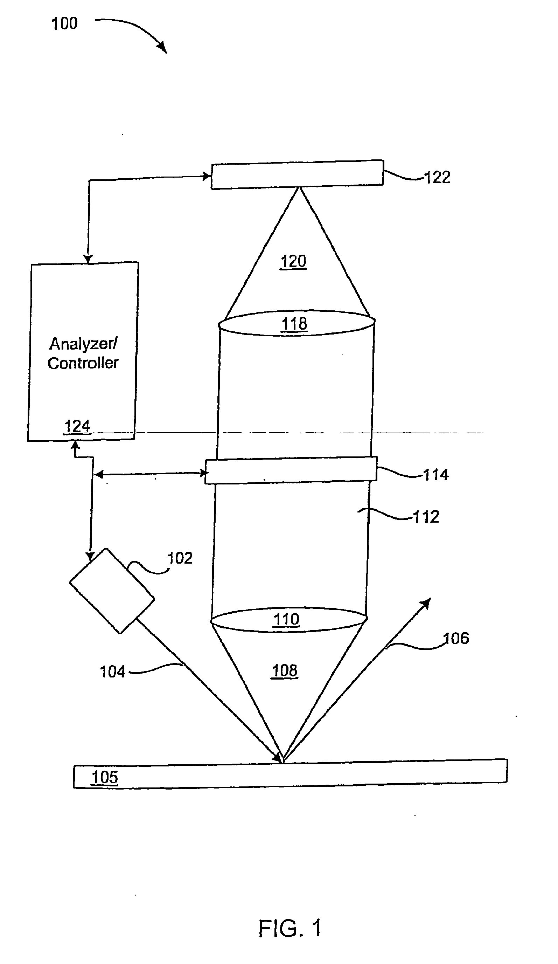

Figure 1 is a simplified diagrammatic illustration of a darkfield optical inspection system 100 in accordance with one embodiment of the present invention. The illustrated inspection system 100 of Figure 1 only includes features that will facilitate discussion of the embodiments of the present invention. Figure 1 does not include several typical components of an inspection system so as to not obscure the present invention. Additionally, the relative dimensions of the components and placement of such components of Figure 1 may be distorted so as to better illustrate embodiments of the present invention. As shown, the inspection system 100 includes a light source 102 for generating and directing a light or electromagnetic beam 104 onto a surface of sample 105.

The sample may be any suitable device or structure that may be inspected for defects using optical inspection techniques. By way of examples, the sample may include wafers, reticles, photo masks, flat panels and other specimens. The defects may include any suitable defect that is detectable through optical inspection techniques. Defects that tend to scatter light are detectable through darkfield techniques include, but are not limited to, particles on the sample and voids within the sample surface.

A portion of the incident beam is reflected off the sample 105 as reflected beam 106. Additionally, portions of the beam are scattered off the sample 105 as scattered light 108. Various characteristics of the sample may result in portions of the incident beam 104 being scattered as scattered light 108. Particular types of defects (*e.g*., particles or voids on the sample surface) may cause the incident beam to scatter. Repeating patterns on the sample that are not defects may also cause the incident beam to scatter. For example, typical integrated circuit repetitive designs may cause the incident light to scatter.

The scattered light 108 is directed through a first lens 110 that outputs collimated scattered light 112. Any suitable mechanism may be utilized to collect the scattered light, besides the first lens 110. For example, a pair of side mirrors may be used to direct the scattered light 108 towards a programmable spatial filter (PSF) 114. As shown, the first lens 110 collects the scattered light 108 and directs it towards PSF 114 which is positioned within the Fourier transform plane. Although the PSF is described herein as filtering "scattered" light, of course, the PSF may filter any type of light, such as reflected light.

In general terms, the PSF 114 is configurable to effectively inhibit one or more portions of the scattered light and effectively transmit portions of the scattered light for a light source within the UV wavelength range. Preferably, the PSF has a minimum extinction value of about 400:1 and a minimum transmission value of about 40 percent for an incident light beam having a wavelength between about 340 nm and about 400 nm. Most preferably, the PSF has a minimum extinction value of about 500:1 and a minimum transmission value of about 50 percent. The portions of the scattered light that are inhibited are substantially prevented from reaching the second lens 118, while scattered light that is transmitted substantially reaches the second lens 118.

Any suitable optical inspection system may be modified to incorporate one or more of the programmable spatial filter embodiments of the present invention. For example, the spatial filtered inspection mechanisms of the present invention may be combined with any other suitable optical inspection system. In a specific implementation, an inspection tool may include darkfield inspection capabilities and brightfield inspection capabilities. Several embodiments of a combination darkfield and brightfield system are described in the U.S. Patent Number 5,822,055 by Tsai et al., issued October 13, 1998 and U.S. Patent Number 6,201,601 by Vaez-Iravani et al., issued 13 March 2001. These inspection systems may be easily modified to include a spatial filter of the present invention.

Referring back to Figure 1, the second lens is configured to direct the transmitted scattered light 120 towards detector 122 positioned within the image plane. The detector is configured to generate an image of at least a portion of a sample that corresponds to the scattered light. The resulting image may then be received into an analyzer 124, wherein the analyzer 124 determines whether there are any defects present on the sample portion by analyzing the received image. The analyzer or controller 124 may be configured to perform any suitable techniques of the present invention, as well as typical control or monitoring mechanisms of the inspection system 100. By way of examples, the analyzer or controller 124 may be configured to configure various components of the inspection system, such as the detector 122, the PSF 114, and the light source 102, or to monitor characteristics of various components.

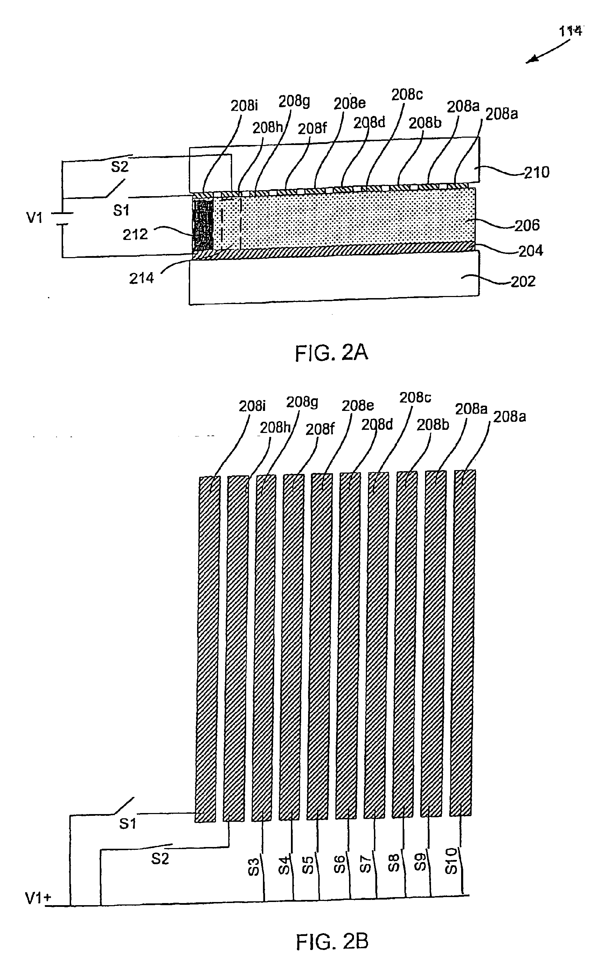

The PSF may be constructed in any suitable manner so as to achieve effective extinction and transmission performance under UV light conditions (e.g., the above described extinction and transmission values). Figures 2A and 2B illustrate a side view and a top view, respectively, of the programmable spatial filter 114 of Figure 1 in accordance with one embodiment of the present invention. In one implementation, the PSF is sized to cover the aperture of the scattered light. As shown, the PSF includes a pair of plates 202 and 210. The plates are formed from a material that substantially transmits ultraviolet light, *i.e.,* the plates are each UV compatible. In one implementation, the plates are formed from UV grade glass. In the illustrated embodiment, the plates are arranged parallel to each other and sized to cover an aperture of the scattered light.

The PSF 114 also includes a first indium tin oxide (ITO) layer 204 and a second ITO layer 208 formed from a plurality of ITO layer portions 208a through 208i deposed on a first one of the plates 202 and a second one of the plates 210, respectively. The ITO layers are conductive and transmit UV light effectively. Of course, any suitable material may be used, instead of ITO, that is both conductive and transparent. The first and second ITO layers 204 and 208 are deposed on each of the plates 202 and 210, respectively. An ITO layer or pattern may be more easily deposited onto the plate if the plate is formed from glass, as compared to when the plate is formed from a conventional plastic. In one embodiment shown in Figure 2B, the second ITO layer portions 208 form a plurality of parallel strips 208a through 208i. In one embodiment, the ITO layers are relatively thin so as to allow acceptable performance under UV conditions. A thickness that results in a sheet resistance between about 100 and 300 Σ per square has acceptable conductance and transmission capabilities for UV light.

The PSF also includes a material 206 between the first and second ITO layers that is selectively configurable to provide UV compatible transmission and opacity performance. For example, a polymer stabilized liquid crystal material may be used. Such a liquid crystal material may be obtained from any suitable company that specializes in liquid crystal applications, such as AlphaMicron or Kent Optronics, both of Kent, Ohio. Polymer stabilized liquid crystal materials are described further in the article *"*Assemble-Averaged Dynamic Light Scattering from Polymer-Stabilized Liquid Crystals." By P.Y. Lui, L.C. Chien, Mol. Crys. 348, 187-205 (2000) and U.S. Patent No. 5,691,795 by Doane et al., issued 25 November 1997.

Each of the second ITO layer portions 208 are coupled to a mechanism for selectively applying a voltage potential difference between one or more of the second ITO layer portions 208 and the first ITO layer 204. As shown in Figure 2B, ITO layer portion 208a is coupled to switch S10, while ITO layer portion 208i is coupled to switch S1. Each of the switches S1 though S10 are coupled to voltage source V1.
The voltage source V1 is also coupled to the first ITO layer 204. Thus, the voltage V1 may be applied selectively between one or more second ITO layer portions 208 and the first ITO layer 204. The voltage may be applied selectively (or selectively not applied) to one or more of the second ITO layer portions 208 by any suitable mechanism. In the illustrated embodiment, the controller 124 of Figure 1 is configured to control the switches S1 through S10 of Figure 2B.

When substantially no voltage potential difference is applied between one of the second ITO portions 208 and the first ITO layer 204 (or when the voltage difference drops below a predetermined threshold), the portion of the liquid crystal material 206 that is positioned between the selected second ITO portion 208 and the first ITO layer 204 generally becomes opaque to the scattered light going through such liquid crystal portion. In an alternative implementation, a voltage difference above a predetermined threshold may cause the liquid crystal material to become opaque. This opacity causes a corresponding spatial portion of the scattered light to be inhibited from reaching the detector. The opaque portion of the liquid crystal causes a substantial portion of the scattered light directed through the "deactivated" second ITO portion (e.g., 208i) to be scattered away from the detector. As shown in Figure 2A, S1 is open so that a voltage potential difference is not applied between second layer portion 208i and the first layer 204 to thereby cause a portion 212 of the liquid crystal 206 to become opaque. In contrast, S2 is closed so that a voltage potential difference is applied between the second layer portion 208h and the first layer 204 to thereby cause a portion 214 to become clear. Any number of the second ITO layer portions 208 may be selectively switched to not be decoupled from voltage V1 so that corresponding portions of liquid crystal 206 may become opaque and inhibit different spatial portions of the scattered light from the sample.

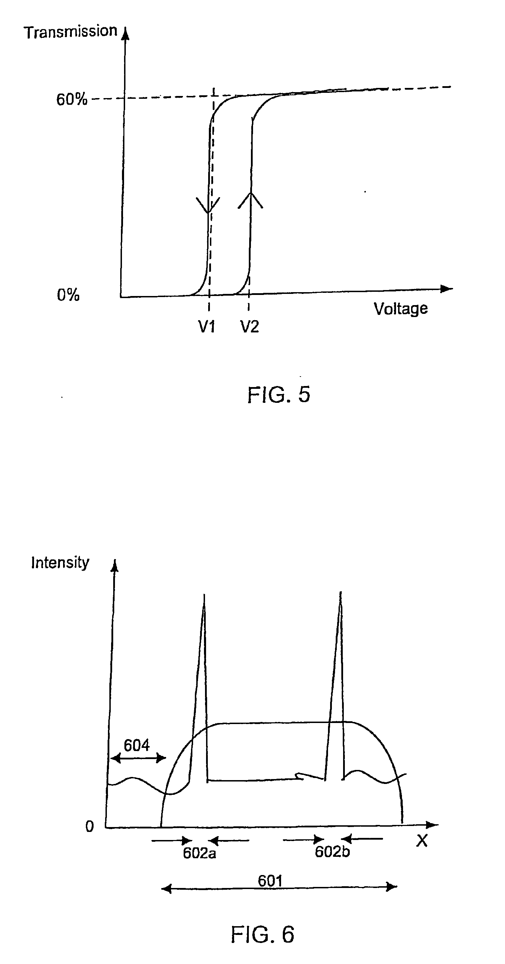

In one embodiment, the ITO layer portions 208 are selectively deactivated to inhibit certain spatial scattered light portions that result from repeating patterns on the sample, rather than defects. That is, the ITO layers are selected to correspond to portions of the scattered light that contain "nuisance" defects. These inhibited portions of the scattered light may include sharp, bright diffraction spots resulting from repeating patterns on the sample Alternatively, the inhibited spatial portions may include scattered light at particular angles with respect to the plane of incidence, such as 45 and 90 degrees, that result from repeating lines on the sample. A selection example is described further below with reference to Figure 6.

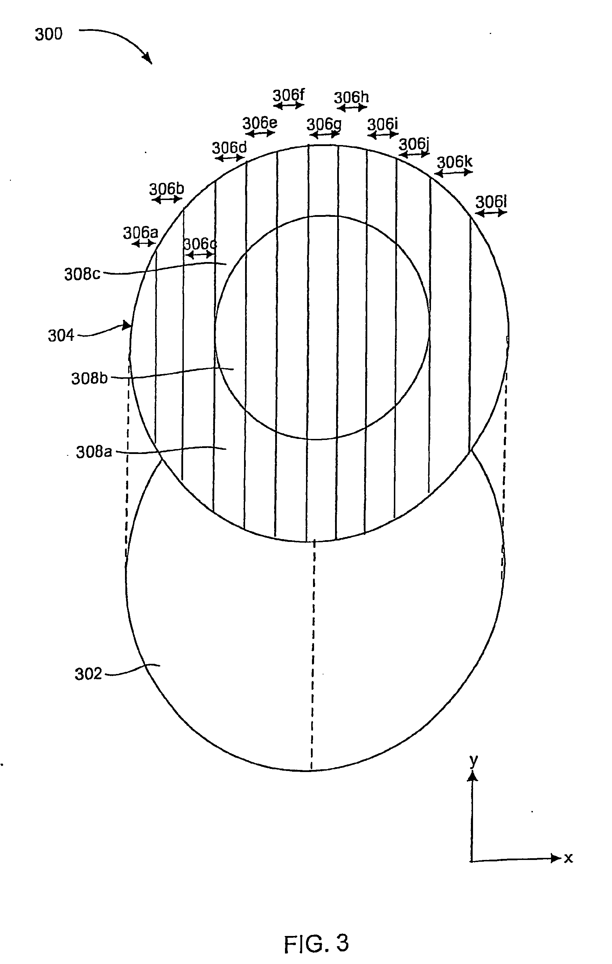

Figure 3 is a illustration of a first segmented ITO layer 304 and a second ITO layer 302 of a PSF in accordance with an alternative embodiment of the present invention. These ITO layers may be used to form part of a programmable spatial filter, such as the PSF illustrated in Figure 2A. That is, the ITO layers 304 and 302 of Figure 3 may replace the ITO layers 204 and 208 of Figure 2A. All the additional features described above in relation to Figures 2A and 2B may be used within a PSF which includes the ITO layers of Figure 3. Referring back to Figure 3, the first ITO layer 304 is formed from a plurality of strips 306a through 3061. At least a portion of the strips 306 are "segmented." As shown, strip 306d includes segments 308a through 308c. Likewise, strips 306e through 306j are each also segmented. Each strip or segment may be individually deactivated. For instance, a voltage difference may be decoupled from between segment 308a and the second ITO layer 302. Likewise, a voltage difference may be decoupled from between segment 308b and the second ITO layer 302. A voltage difference may also be decoupled from between any of the strips that are not segmented. For instance, a voltage difference may be decoupled from between strip 306a and the second ITO layer 302.

Segmentation of one of the ITO layers allows greater flexibility in inhibiting different spatial portions of the scattered light. In other words, the PSF can be configured to inhibit selected spatial portions of the scattered light in two directions (e.g., x and y). The PSF embodiments of Figures 2A and 2B merely selectively inhibit spatial portions of the scattered light in one direction. That is, one may selectively inhibit one or more strips of scattered light in a single dimension or direction. In contrast, the embodiment of Figure 3 allows one to selectively inhibit different portions of scattered light in an x direction by selecting one or more of the strips (i.e., 306a through 3061) and in a y direction by selecting one or more of the segments (e.g., 308a, 308b, and/or 308c). The segments of the ITO layer may be arranged in any two suitable directions, which do not have to be perpendicular to each other as shown in the illustrated embodiment.

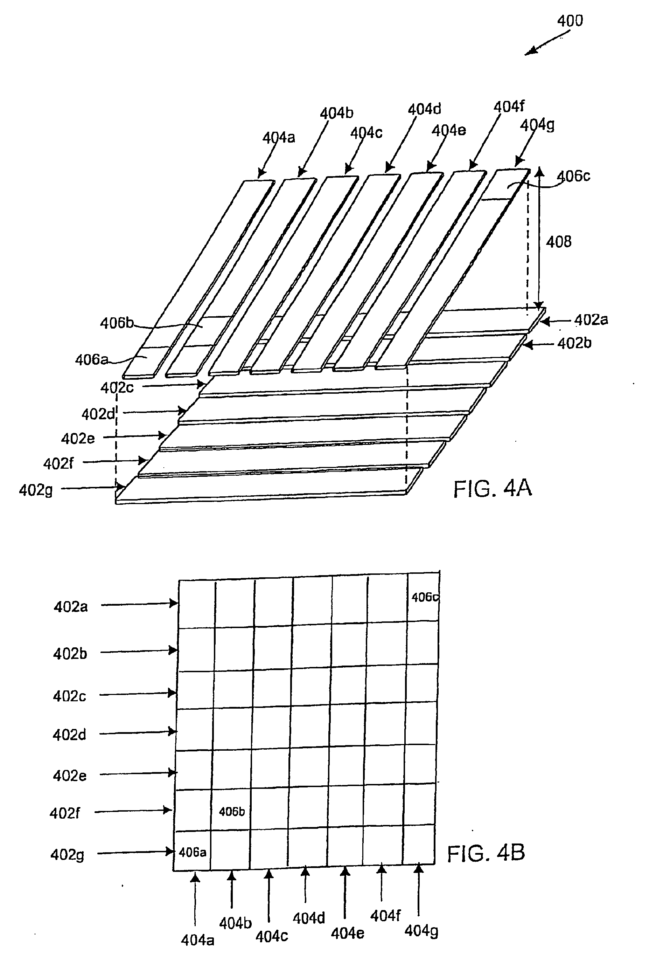

Figures 4A and 4B illustrate a perspective view and a top view, respectively, of a first and second ITO layer of a programmable spatial filter in accordance with a two dimensional embodiment of the present invention. In this embodiment, a two dimensional array of ITO portions may be selectively deactivated so that a corresponding two dimensional array of liquid crystal portions are selectively turned opaque. The ITO layers of Figures 4A and 4B may be incorporated into the PSF of Figures 2A and 2B. That is, the ITO layers of Figures 4A and 4B may be substituted for the ITO layers of Figures 2A and 2B. All the additional features described above in relation to Figures 2A and 2B may be used within a PSF which includes the ITO layers of Figures 4A and 4B.

As shown, a first ITO layer 404 is formed into a plurality of strips or "columns." A second ITO layer 402 is formed into a plurality of strips or "rows." The first ITO layer 404 is positioned over the second ITO layer 402. A liquid crystal material 408 is positioned between the first ITO layer 404 and the second ITO layer 402. The first and second ITO layers form a plurality of intersections 406. Each intersection 406 corresponds to a portion of the liquid crystal material 408 that is positioned between the intersection area 406. Of course, the two ITO layers may be arranged in any suitable number and type of shapes so as to form a plurality of intersections between pairs of adjacent first and second ITO layer portions.

Referring to Figure 4B, each intersection may be deactivated by decoupling or reducing a voltage from a selected row of ITO layer 402 and a selected column of ITO layer 404. For example, when a particular voltage difference that is less than or equal to a predetermined threshold is applied between the lower layer row 402g and the upper column 404a, intersection 406a is deactivated. That is, the liquid crystal material that is below the intersection 406a or between the overlapping column 404a and row 402g becomes opaque. By way of another example, when a voltage potential difference below the predetermined level is applied between row 402a and column 404g, the intersection 406c becomes deactivated so that the liquid crystal material below this intersection 406c becomes opaque. In an alternative embodiment, an intersection becomes opaque when a voltage difference applied between the overlapping column and row rises above a predetermined threshold.

Preferably, the liquid crystal material is formed from a bi-stable material. Figure 5 is a graph of transmission as a function of the voltage applied between any of the intersections of the ITO layer of Figure 4A and 4B in accordance with one embodiment of the present invention. At zero voltage potential difference, there is zero transmission through the ITO intersection. When the voltage difference is greater than V2, the transmission percentage through such intersection increases to a plateau, for example, of 60%. The intersection stays at 60% transmission until the voltage difference falls below V1. That is, the voltage difference may fall below the voltage V2 that activated such intersection and still remain "on".

Thus, the voltage to turn on a particular intersection may be met by a contribution of voltages applied to both a particular row and a particular column. In one implementation, the voltage of either the corresponding row or column may be removed without causing the particular intersection to switch to the off state. In other words, the intersection is maintained in an on state for a range of voltages (*i.e.*, V1 through V2) below the initial "turn-on" voltage V2. For example, 50 volts may be applied to a first row and 50 volts may be applied to a first column to activate a particular intersection. The first row voltage may be then decreased to zero, while the first column remains at 50 volts. If V1 corresponds to 50 volts and V2 corresponds to a 100 volts, the intersection will remain on even though it is now at 50 volts, instead of 100 volts. This bimodal scheme allows another intersection in the same row or column as a particular intersection to deactivate without turning off the particular intersection.

When the intersection voltage falls below V1, the intersection switches to the off state and the corresponding liquid crystal portion becomes opaque and inhibits a previously transmitted portion of the scattered light to now be blocked from passing through the PSF. For example, the above described particular intersection may be turned off by having both voltages of the first row and first column fall below V1 or 50 volts (*e.g*., the first row and column fall to 0 V). A particular intersection will remain off when the voltage at such intersection is increased to voltages between V1 and V2. Even if the voltage of a particular row or column goes above V1 or 50 volts, the particular intersection remains off. This bimodal scheme allows another intersection in the same row or column as a particular intersection to activate without turning on the particular deactivated intersection.

The PSF embodiments of the present invention may be used to selectively mask various portions of the scattered light that correspond to "nuisance defects", as well as portions of the scattered light that are known to not contain the "real defect." Figure 6 illustrates an example of scattered light intensity from a sample as a function of the x direction. As shown, portion 601 of the scattered light corresponds to the defect itself. The scattered light portions 602a and 602b correspond to "nuisance defects" in the form of bright, sharp diffraction spots resulting from a repeating pattern on the sample. The scattered light portion 604 corresponds to a portion of the scattered light that is known to not contain a defect. The PSF of the present invention may be used to inhibit scattered light from portions 602a, 602b, and 604 so as to isolate and enhance the actual defect 601.

Although the foregoing invention has been described in some detail for purposes of clarity of understanding, it will be apparent that certain changes and modifications may be practiced within the scope of the appended claims.

## Claims

1. An optical inspection system (100) for detecting anomalies on a sample (105) comprising:
a light source (102) for directing an incident light beam (104) onto a sample (105);
a programmable spatial filter (PSF) (114) arranged in a path of light emanating from the sample (105) in response to the incident light beam (104), the PSF (114) being constructed from materials arranged to inhibit at least a first portion of the emanating light with a minimum extinction value of about 400:1 and transmit at least at least a second portion of the emanating light with a minimum transmission value of about 40 percent for an incident light beam (104) having a wavelength between about 340 nanometres and about 400 nanometres;
a detector (122) arranged within the path of the emanating light so that the second portion of the emanating light that is transmitted by the PSF (114) impinges on the detector (122) to thereby form an image of at least a portion of the sample (105); and
an analyzer (124) for receiving the image and determining whether there are any defects present on the sample portion by analyzing the received image;
wherein the PSF (114) comprises a pair of plates (202,210) formed from a first material that substantially transmits UV light, layers (204,208,402,404) of a second material forming one or more portions deposed on each at the pair of plates (202,210), said second material being conductive and transmits UV light, and a third material (206) between the layers (204,208,402,404) of the second material that is selectively configurable to provide UV compatible transmission and opacity performance, each of the portions of the layers (204,208,402,404) of the second material being coupled to a mechanism for selectively applying a voltage potential, such that when a predetermined voltage difference is applied across the third material (206) between portions of the second material, the third material (206) becomes opaque or transparent.

2. A system (100) as recited in claim 1, wherein the PSF (114) is configurable to inhibit at least a first portion of the emanating light with the extinction value being about 500:1 and transmit at least at least a second portion of the emanating light with the minimum transmission value being about 50 percent.

3. A system (100) as received in claims 1 or 2, wherein:
the pair of plates (202,210) are sized to cover an aperture of the emanating light, the plates being arranged parallel to each other;
the layers (204,208) of the second material comprise a first indium tin oxide (ITO) layer (204) deposed on a first one of the plates (202), and a second plurality of ITO layer portions (208a-208i) deposed on a second one of the plates (210) wherein the first ITO layer (204) and the second ITO layer portions (208a-208i) are positioned between the plates (202,210); and
the third material (206) comprises a liquid crystal layer (206) arranged between the first ITO layer (204) and second ITO layer portions (208a-208i).

4. A system (100) as recited in claim 3, wherein the analyzer (124) is further configured to selectively apply a voltage potential difference between at least one of the second ITO layer portions (208a-208i) and the first ITO layer (204) so that an adjacent portion of the liquid crystal layer (206) allows transmission of a first portion of the emanating light while another portion of the liquid crystal layer (206) on which a voltage potential difference is not applied inhibits a second portion of the emanating light through the PSF.

5. A system (100) as recited in claim 4, wherein the voltage potential difference is greater than a predetermined threshold, and wherein the adjacent portion of the liquid crystal layer (206) allows transmission when a voltage potential difference is applied that is greater than the predetermined threshold.

6. A system (100) as recited in claim 4, wherein the voltage potential difference is less than a predetermined threshold, and wherein the adjacent portion of the liquid crystal layer (206) allows transmission when a voltage potential difference is applied that is less than the predetermined threshold.

7. A system (100) as recited is any of the claims claim 3-6, wherein the liquid crystal material (206) substantially transmits UV light.

8. A system (100) as recited in claim 7, wherein the liquid crystal material (206) is a polymer stabilized liquid crystal material.

9. A system (100) as recited in any of the claims claim 3-8, wherein the pair of plates (202,210) are formed from a UV grade glass.

10. A system (100) as recited in any of claims 3-9, wherein the first and second ITO layers (204,208) have a thickness value so as to result in a sheet resistance between about 100 and about 300 Ω per square.

11. A system (100) as recited in any of claims claim 3-10, wherein the second plurality of ITO layer portions (208a-208i) are distributed across a first direction.

12. A system (100) as recited in claim 11, wherein the analyzer (124) is further configured to determine which one or more noise portions of the emanating light result from repeating patterns on the sample (105), wherein the voltage potential difference is selectively applied to inhibit such noise portions.

13. A system (100) as recited in claim 12, wherein the noise portion(s) correspond to one or more sharp, bright diffraction spots resulting from repeating patterns on the sample (105).

14. A system (100) as recited in claims 12 or 13, wherein the noise portion(s) of the emanating light correspond to one or more regions at one or more selected angle(s) resulting from repeating lines on the sample (105).

15. A system (100) as recited in claim 14, wherein the selected angle includes 45 degrees from a plane of incidence.

16. A system (100) as recited in claim 14, wherein the selected angle includes 90 degrees from a plane of incidence.

17. A system (100) as recited in any of claims 1-16, wherein the PSF (114) positioned within a Fourier transform plane of the emanating light and the detector (122) is positioned within an image plane of the emanating light.

18. A system (100) as recited in any of claims 1-16, wherein the emanating light is scattered light, as opposed to reflected light.

19. A system (100) as recited in claim 8 when dependant upon claim 4, wherein the PSF (114) is positioned within a Fourier transform plane of the emanating light and the detector (122) is positioned within an image plane of the emanating light.

20. A system (100) as recited in claim 8 when dependent upon claim 4, wherein the first voltage potential is greater than a first predetermined threshold, wherein the analyzer (124) is further configured to apply a second potential difference between the other portion of the PSLC layer (206) on which the first voltage potential difference is not applied, and wherein the second voltage potential difference is less than the first predetermined threshold.

21. A system (100) as recited in claim 8 when dependent upon claim 4, wherein the first voltage potential allows transmission when it is below a first predetermined threshold, wherein the analyzer (124) is further configured to apply a second potential difference between the other portion of the PSLC layer (208) on which the first voltage potential difference is not applied, and wherein the second voltage potential difference is greater than the first predetermined threshold.

22. A system (100) as recited in claim 1 wherein the selected portion of the emanating light inhibited or transmitted by the PSF (114) may be selected from a plurality of emanating light portions arranged along a first direction, as well as in a second direction, the first direction differing from the second direction.

23. A system (100) as recited in claim 22, wherein the first direction is perpendicular to the second direction.

24. A system (100) as recited in claims 22 or 23, wherein the PSF (114) is arranged to facilitate inhibition of portions of the emanating light at a particular angle resulting from patterns on the sample (105).

25. A system (100) as recited in any of the claims 22-24, wherein the angle is 45 degrees from a plane of incidence.

26. A system (100) as recited in any of claims 22-24, wherein the angle is 90 degrees from a plane of incidence.

27. A system (100) as recited in any of claims 22-26, wherein:
the pair of plates (202,210) are sized to cover an aperture of the emanating light, the plates (202,210) being arranged parallel to each other;
the layers (402,404) of the second material comprise a first indium tin oxide (ITO) layer deposed on a first one of the plates (202) and a second ITO layer deposed on a second one of the plates (210), wherein the first and second ITO layer (402,404) are positioned between the plates (202,210), and wherein the first and/or the second ITO layer (402,404) is divided into portions along both the first and second directions; and
the third material comprises a liquid crystal layer (206) arranged between the first ITO layer (402) and the second ITO layer portions (404).

28. A system (100) as recited in claim 27, wherein the first ITO layer (402) is divided into portions and the second layer (404) is not, the system further comprising a controller (124) configured for selectively applying a voltage potential difference between at least a one of the first ITO layer portions (402) and the second ITO layer (404) so that an adjacent portion of the liquid crystal layer (206) allows transmission of a first portion of the emanating light while another portion of the liquid crystal layer (206) on which a voltage potential difference is not applied inhibits a second portion of the emanating light through the PSF.

29. A system (100) as recited in claim 28, wherein the voltage potential difference is greater than a predetermined threshold, and wherein the adjacent portion of the liquid crystal layer (206) allow transmission when a voltage potential difference is applied that is greater than the predetermined threshold.

30. A system (100) as recited in claim 28, wherein the voltage potential difference is less than a predetermined threshold, and wherein the adjacent portion of the liquid crystal layer (206) allow transmission when a voltage potential difference is applied that is less than the predetermined threshold.

31. A system (100) as recited in claim 27, wherein the first ITO layer (402) is divided into a plurality of portions that are arranged in a plurality of rows and the second ITO layer (404) is divided into a plurality of columns, the system comprising a controller (124) configured to apply a first voltage potential difference between a selected row and a selected column so that a portion of the liquid crystal layer (408) that is adjacent to an intersection of the selected row and column changes from being configured to inhibit to being configured to transmit a corresponding portion of the emanating light.

32. A system (100) as recited in claim 31, wherein the controller (124) is further configured to apply a second voltage potential difference between the selected row and the selected column that previously had a first voltage applied there between so that the portion of the liquid crystal layer (408) that is adjacent to the intersection of the selected row and column remains configured to transmit the corresponding portion of the emanating light, wherein the second potential difference is lower than the first potential difference.

33. A system (100) as recited in claim 32, wherein the controller (124) is further configured to allow a third voltage potential difference between the selected row and the selected column that previously had a second voltage applied there between so that the portion of the liquid crystal layer (408) that is adjacent to the intersection of the selected row and column changes from being configured to transmit to being configured to inhibit the corresponding portion of the emanating light wherein the third potential difference is lower than the second potential difference.

34. A system (100) as recited in claim 33, wherein the controller (124) is further configured to allow a fourth voltage potential difference between the selected row and the selected column that previously had a third voltage applied there between so that the portion of the liquid crystal layer (408) that is adjacent to the intersection of the selected row and column remains configured to inhibit the corresponding portion of the emanating light wherein the fourth potential difference is higher than the third potential difference.

35. A system (100) as recited in claim 34, wherein the liquid crystal layer (408) is a bi-stable material.

36. A system (100) as recited in claim 1, wherein:
the pair of plates (202,210) are sized to cover an aperture of the emanating light, the plates (202,210) being arranged parallel to each other;
the layers (402,404) of the second material comprise a first indium tin oxide (ITO) layer (402) deposed on a first one of the plates (202), the first ITO layer (402) being divided into a plurality of first portions along a first direction and a second ITO layer (404) deposed on a second one of the plates (210), wherein the first and second ITO layer (402,404) are positioned between the plates (202,210), the second ITO layer (404) being divided into a plurality of first portions along a second direction that differs from the first direction;
the third material comprises a liquid crystal layer (408) arranged between the first ITO layer (402) and second ITO layer portions (404), the liquid crystal layer (408) being formed from a bi-stable material;
wherein the system further comprises a controller (124) configured for selectively applying a voltage potential difference between at least a pair of first and second ITO layer portions (402,404) so that an adjacent portion of the liquid crystal layer (408) is configured to inhibit or transmit one of more first portions of the emanating light.

37. A system (100) as recited in claim 38, wherein the liquid crystal (408) substantially transmits UV light.

38. A system (100) as recited in claim 37, wherein the liquid crystal (408) is a polymer stabilized liquid crystal material.

39. A system (100) as recited in any of the claims 36-38, wherein the pair of plates (202,210) are formed from a UV grade glass.

40. A system (100) as recited in any of claims 36-39, wherein the first and second ITO layers (402,404) have a thickness value so as to result in between about 100 and about 300 Ω per square.

41. A system (100) as recited in any of claims 36-40, wherein the voltage potential difference is greater than a predetermined threshold, and wherein the adjacent portion of the liquid crystal layer (206) allows transmission when a voltage potential difference is applied that is greater than the predetermined threshold.

42. A system (100) as recited in any of claims 36-40, wherein the voltage potential difference is less than a predetermined threshold, and wherein the adjacent portion of the liquid crystal layer (206) allow transmission when a voltage potential difference is applied that is less than the predetermined threshold.

43. A method of detecting anomalies on a sample (105) the method comprising:
directing an incident light beam (104) onto a sample (105), the incident light beam (104) having a wavelength between about 340 nanometres and about 400 nanometres;
selectively inhibiting at least one first spatial portion of an emanating light beam, which results from the incident light beam (104) hitting the sample (105), from reaching a detector (122) positioned within an image plane of such emanating light beam, the inhibition being accomplished by configuring a programmable spatial filter (PSF) (114); and
transmitting one or more second spatial portion(s) of the emanating light beam through the PSF (114) to the detector (122);
wherein the first spatial portion(s) have a minimum extinction value of about 500:1 and the second spatial portion(s) have a minimum transmission value of about 50 percent for the wavelength of the incident light beam; and
wherein the PSF (114) comprises a pair of plates (202,210) formed from a first material that substantially transmits UV light, layers (204,208,402,404) of a second material forming one or more portions deposed on each of the pair of plates (202,210), said second material being conductive and transmits UV light, and a third material (206) between the layers (204,208,402,404) of the second material that is selectively configurable to provide UV compatible transmission and opacity performance, each of the portions of the layers (204,208,402,404) of the second material being coupled to a mechanism for selectively applying a voltage potential, such that when a predetermined voltage difference is applied across the third material (206) between portions of the second material, the third material (206) becomes opaque or transparent.

44. A method as recited in claim 43, wherein the first spatial portion(s) that are inhibited from reaching the detector (122) are selected to correspond to emanating light resulting from repeating patterns on the sample (105).

45. A method as recited in claim 44, wherein the first spatial portion(s) are selected to correspond to one or more sharp bright diffraction spots resulting from repeating patterns on the sample (105).

46. A method as recited in claim 44, wherein the first spatial portion(s) are selected to correspond to one or more regions at one or more selected angle(s) resulting from repeating lines on the sample (105).

47. A method as recited in claim 46, wherein the selected angle(s) include 45 degrees from a plane of incidence.

48. A method as recited in claim 46, wherein the selected angle(s) include 90 degrees from a plane of incidence.

49. A method as recited in claim 43, wherein the inhibiting and transmitting is performed within a Fourier transform plane of the emanating light.

50. A method as recited in claim 43, wherein a first spatial portion is transmitted by applying a first voltage potential difference between a first row and a first column of a programmable spatial filter (PSF) (114) having a plurality of addressable rows and columns.

51. A method as recited in claim 50, further comprising maintaining the transmission of the first spatial portion of the emanating light by applying a second voltage potential difference between the first row and the first column, the second voltage difference being lower than the first voltage potential difference.

52. A method as recited in claim 51, further comprising inhibiting the first spatial portion of the emanating light through the PSF (114) from reaching the detector (122) by applying a third voltage potential difference to the first row and the first column, wherein the third voltage potential difference is lower than the second voltage potential difference.

53. A method as recited in claim 52, further comprising maintaining the inhibition of the first spatial portion of the emanating light by applying the second voltage potential difference between the first row and the first column.

54. A method as recited in any of claims 51-53, wherein inhibiting the second spatial portion of the emanating light beam from reaching the PSF (114) the detector (122) is accomplished by applying a second voltage potential to a second row and a second column, the second voltage being lower than the first voltage.

55. A method as recited in claim 54, wherein the second voltage is less than the first voltage by a predetermined amount when the second spatial portion of the emanating light was previously being inhibited from passing through the PSF (114).

56. A method as recited in claim 54, wherein the second voltage is less than the first voltage by a second predetermined amount that is greater than the first predetermined amount when the second spatial portion of the emanating light was previously being transmitted through the PSF (114).

## Patentansprüche

1. Das System der optischen Inspektion (100) zum Nachweis von Anomalien in der Probe (105), das folgendes enthält:
Lichtquelle (102), um das einfallende Lichtbündel (104) auf die Probe (105) zu richten;
Programmierbarer Raumfilter (PSF - programmable spatial filter) (114), angebracht auf dem Wege des von der Probe (105) als Antwort auf das einfallende Lichtbündel (104) ausgehenden Lichts, wobei der PSF (114) aus solchen Materialien konstruiert wird, die zum Blockieren des mindestens ersten Teils des ausströmenden Lichts mit einem minimalen Auslöschungsverhältnis von 400:1 geeignet sind und mindestens den zweiten Teil des ausströmenden Lichts mit einem minimalen Übertragungswert von ungefähr 40% für das einfallende Lichtbündel (104) überträgt, das eine Wellenlänge von zwischen ungefähr 340 Nanometern und ungefähr 400 Nanometern hat;
der Detektor (122), der auf dem Wege des von der Probe (105) kommenden Lichts so angebracht ist, dass der zweite Teil des ausströmenden Lichts, der durch den PSF (114) übertragen wird, den Detektor (122) erreicht, wodurch das Bild von mindestens einem Teil der Probe (105) formiert wird;
der Analysator (124) zur Abnahme des Bildes und der Bestimmung, ob auf dem Teil der Probe durch die Analyse des erhaltenen Bildes Fehler festgestellt wurden;
wobei der PSF (114) folgendes enthält: ein Plattenpaar (202, 210), hergestellt aus dem ersten Material des prinzipiell übertragenden UV-Lichtes, Schichten (204, 208, 402, 404) des zweiten Materials, das ein oder zwei auf jeder der Plattenpaare abgelagerten Gebiete bildet (202, 210), wobei das zweite Material leitend ist und UV-Licht überträgt; und das dritte Material (206) zwischen den Schichten (204, 208, 402, 404) des zweiten Materials, das selektiv konfigurierbar ist, um eine kompatible Übertragung des UV-Lichtes und das Auftreten von Undurchsichtigkeiten zu sichern; dagegen ist jedes der Gebiete der Schichten (204, 208, 402, 404) vom zweiten Material mit einem Mechanismus zum selektiven Applizieren des Spannungspotentials gekoppelt, und zwar so, dass wenn die festgestellte Spannungsdifferenz auf den Gegenseiten des dritten Materials (206) zwischen den Gebieten des zweiten Materials appliziert wird, dann wird das dritte Material (206) undurchsichtig oder transparent.

2. Das System (100) nach Anspruch 1, in dem PSF (114) zum Blockieren des mindestens ersten Teils des ausströmenden Lichts mit einem Auslöschungsverhältnis von ungefähr 500:1 und Übertragen mindestens des zweiten Teils des ausströmenden Lichts mit einem minimalen Übertragungswert von ungefähr 50% konfigurierbar ist.

3. Das System (100) nach Anspruch 1 oder 2, in dem:
das Plattenpaar (202, 210) eine solche Größe hat, die das Abdecken der Apertur des ausströmenden Lichts ermöglicht, und die Platten parallel zueinander aufgestellt sind;
die Schichten (204, 208) des zweiten Materials enthalten die erste Schicht ITO (aus Indiumoxid und Zinn) (204), deponiert auf der ersten Platte (202), und die Gruppe der Gebiete der zweiten Schicht ITO (208a-208i), deponiert auf der zweiten der Platten (210), wo die erste Schicht ITO (204) und die Gruppe der Gebiete der zweiten Schicht ITO (208a-208i) zwischen den Platten (202, 210) angebracht ist; sowie
das dritte Material (206) eine flüssigkristalline Schicht (206) enthält, die sich zwischen der ersten Schicht ITO (204) und der zweiten Gruppe der Schicht ITO (208a-208i) befindet.

4. Das System (100) nach Anspruch 3, in dem der Analysator (124) zum selektiven Applizieren der Differenz der Spannungspotentiale zwischen mindestens einem Gebiet der zweiten Schicht ITO (208a-208i) und der ersten Schicht ITO (204) zusätzlich konfiguriert wird, und zwar so, dass das benachbarte Gebiet der flüssigkristallinen Schicht (206) die Übertragung des ersten Teiles des ausströmenden Lichts ermöglicht, während die übrigen Gebiete der flüssigkristallinen Schicht (206), an die keine Differenz des Spannungspotentials angelegt ist, den zweiten Teil des durch den PSF ankommenden Lichts blockieren.

5. Das System (100) nach Anspruch 4, in dem die Differenz des Spannungspotentials größer als der definierte Schwellwert ist und in dem die benachbarten Gebiete der flüssigkristallinen Schicht (206) eine Übertragung dann ermöglichen, wenn die angelegte Differenz des Spannungspotentials größer als der definierte Schwellwert ist.

6. Das System (100) nach Anspruch 4, in dem die Differenz des Spannungspotentials kleiner als der definierte Schwellwert ist und in dem die benachbarten Gebiete der flüssigkristallinen Schicht (206) eine Übertragung dann ermöglichen, wenn die angelegte Differenz des Spannungspotentials kleiner als der definierte Schwellwert ist.

7. Das System (100) nach einem der vorhergehenden Ansprüche 3 bis 6, in dem das flüssigkristalline Material (206) prinzipiell das UV-Licht überträgt.

8. Das System (100) nach Anspruch 7, in dem das flüssigkristalline Material (206) ein stabilisierter flüssigkristalliner Polymerstoff ist.

9. Das System (100) nach einem der vorhergehenden Ansprüche 3 bis 8, in dem das Plattenpaar (202, 210) aus UV-durchlässigem Glas formiert ist (UV grade glass).

10. Das System (100) nach einem der vorhergehenden Ansprüche 3 bis 9, in dem die erste und zweite Schicht ITO (204, 208) eine solche Dicke haben, dass der Oberflächenwiderstand zwischen ungefähr 100 und 300 Ω/Quadrat beträgt.

11. Das System (100) nach einem der vorhergehenden Ansprüche 3 bis 10, in dem die Gruppe der Gebiete der zweiten Schicht ITO (208a-208i) längs der ersten Richtung angeordnet ist.

12. Das System (100) nach Anspruch 11, in dem der Analysator (124) zusätzlich konfiguriert wird, um zu bestimmen, welche der Teile des Rauschen des ausströmenden Lichts von den sich wiederholenden Mustern auf der Probe (105) kommen, wobei die Differenz des Spannungspotentials zwecks Blockieren solcher Rauschenanteile selektiv appliziert wird.

13. Das System (100) nach Anspruch 12, in dem der Teil oder die Teile des Rauschen einem oder mehr scharfen und klaren Diffraktionspunkt entspricht, der das Ergebnis sich auf der Probe (105) wiederholender Muster ist.

14. Das System (100) nach Anspruch 12 oder 13 , in dem der Teil oder die Teile des Rauschen vom ausströmenden Licht einer oder mehreren Regionen in einem oder mehr ausgewählten Winkel entspricht, der das Ergebnis sich auf der Probe (105) wiederholender Muster ist.

15. Das System (100) nach Anspruch 14, in dem der gewählte Winkel einen Winkel von 45° zur Fallebene enthält.

16. Das System (100) nach Anspruch 14, in dem der gewählte Winkel einen Winkel von 90° zur Fallebene enthält.

17. Das System (100) nach einem der vorhergehenden Ansprüche 1-16, in dem der PSF (114) in der Fourier-Ebene des ausströmenden Lichts und der Detektor (122) in der Bildebene des ausströmenden Lichts angebracht ist.

18. Das System (100) nach einem der vorhergehenden Ansprüche 1-16, in dem das ausströmende Licht ein diffuses Licht im Gegensatz zum reflektiertem Licht ist.

19. Das System (100) nach Anspruch 8 in Abhängigkeit von Anspruch 4 der PSF (114) in der Fourier-Ebene des ausströmenden Lichts und der Detektor (122) in der Bildebene des ausströmenden Lichts angebracht ist.

20. Das System (100) nach Anspruch 8 in Abhängigkeit von Anspruch 4, in dem das erste Spannungspotential größer als der erste definierte Schwellwert ist, wobei der Analysator (124) zum Applizieren der zweiten Potentialdifferenz zwischen dem übrigen Gebiet der Schicht PSLC (206) zusätzlich konfiguriert wird, an welche die erste Differenz der Spannungspotentiale nicht angelegt und wo die zweite Differenz der Spannungspotentiale kleiner als der definierte Schwellwert ist.

21. Das System (100) nach Anspruch 8 in Abhängigkeit von Anspruch 4, in dem das erste Spannungspotential eine Übertragung dann ermöglicht, wenn es unter dem definierten Schwellwert liegt, wobei der Analysator (124) zum Applizieren der zweiten Potentialdifferenz zwischen dem übrigen Gebiet der Schicht PSLC (208) zusätzlich konfiguriert wird, an welche die erste Differenz der Spannungspotentiale nicht angelegt und wo die zweite Differenz der Spannungspotentiale größer als der definierte Schwellwert ist.

22. Das System (100) nach Anspruch 1, wo der gewählte Teil des ausströmenden Lichts, durch den PSF (114) blockiert oder übertragen, aus der Gruppe der Teile des ausströmenden Lichtes gewählt sein könnte, die längs der ersten Richtung als auch der zweiten Richtung angeordnet sind, wobei auch die erste Richtung sich von der zweiten Richtung unterscheidet.

23. Das System (100) nach Anspruch 22, in dem die erste Richtung senkrecht zur zweiten Richtung ist.

24. Das System (100) nach Anspruch 22 oder 23, in dem der PSF (114) so aufgestellt ist, um das Blockieren eines Teiles des ausströmenden Lichts unter bestimmten Winkeln, die das Ergebnis der Muster auf der Probe sind (105), zu ermöglichen.

25. Das System (100) nach einem der vorhergehenden Ansprüche 22 bis 24, in dem der gewählte Winkel einen Winkel von 45° zur Fallebene enthält.

26. Das System (100) nach einem der vorhergehenden Ansprüche 22 bis 24, in dem der gewählte Winkel einen Winkel von 90° zur Fallebene enthält.

27. Das System (100) nach einem der vorhergehenden Ansprüche 22 bis 26, in dem:
das Plattenpaar (202, 210) eine solche Größe hat, die das Abdecken der Apertur des ausströmenden Lichts ermöglicht, und die Platten (202, 210) parallel zueinander aufgestellt sind,
die Schichten (402, 404) des zweiten Materials enthalten die erste Schicht ITO (aus Indiumoxid und Zinn), deponiert auf der ersten Platte (202), und die zweite Schicht ITO, deponiert auf der zweiten der Platten (210), wo die erste und zweite Schicht ITO (402, 404) zwischen den Platten (202, 210) angebracht sind, und wo die erste und/oder die zweite Schicht ITO (402, 404) in Bereiche längs beider Richtungen, der ersten und der zweiten, aufgeteilt sind; sowie
das dritte Material eine flüssigkristalline Schicht (206) enthält, die sich zwischen der ersten Schicht ITO (402) und den Gebieten der zweiten Schicht ITO (404) befindet.

28. Das System (100) nach Anspruch 27, in dem die erste Schicht ITO (402) in Gebiete eingeteilt ist, aber die zweite Schicht ITO (404) nicht eingeteilt ist, und das System zusätzlich einen konfigurierten Controller (124) zum selektiven Applizieren der Differenz der Spannungspotentiale zwischen mindestens einem Gebiet der ersten Schicht ITO (402) und der zweiten Schicht ITO (404) enthält, und zwar so, dass das benachbarte Gebiet der flüssigkristallinen Schicht (206) die Übertragung des ersten Teiles des ausströmenden Lichts ermöglicht, während die übrigen Gebiete der flüssigkristallinen Schicht (206), an die keine Differenz des Spannungspotentials angelegt ist, den zweiten Teil des durch den PSF ankommenden Lichts blockieren.

29. Das System (100) nach Anspruch 28, in dem die Differenz des Spannungspotentials größer als der definierte Schwellwert ist und in dem die benachbarten Gebiete der flüssigkristallinen Schicht (206) eine Übertragung dann ermöglichen, wenn die angelegte Differenz des Spannungspotentials größer als der definierte Schwellwert ist.

30. Das System (100) nach Anspruch 28, in dem die Differenz des Spannungspotentials kleiner als der definierte Schwellwert ist und in dem die benachbarten Gebiete der flüssigkristallinen Schicht (206) eine Übertragung dann ermöglichen, wenn die angelegte Differenz des Spannungspotentials kleiner als der definierte Schwellwert ist.

31. Das System (100) nach Anspruch 27, in dem die erste Schicht ITO (402) in Gebiete eingeteilt ist, die in Reihen angeordnet sind, und die zweite Schicht ITO (404) in Spalten eingeteilt ist; darüber hinaus enthält das System einen konfigurierten Controller (124) zum Applizieren der ersten Differenz der Spannungspotentiale zwischen einer ausgewählten Reihe und einer ausgewählten Spalte, und zwar so, dass die flüssigkristalline Schicht (408), die benachbart zur Schnittstelle der ausgewählten Reihe und Spalte ist, einer Veränderung unterliegt, und zwar von einer blockierenden zur durchlässigen Schicht für einen entsprechenden Teil des ausströmenden Lichts.

32. Das System (100) nach Anspruch 31, in dem darüber hinaus der Controller (124) zum Applizieren der zweiten Differenz des Spannungspotentials zwischen der ausgewählten Reihe und der ausgewählten Spalte, zwischen denen vorher die erste Spannung appliziert wurde, konfiguriert wird, und zwar so, dass die flüssigkristalline Schicht (408), die benachbart zur Schnittstelle der ausgewählten Reihe und der ausgewählten Spalte ist, zum Übertragen von einem entsprechenden Teil des ausströmenden Lichts konfiguriert bleibt, wobei die zweite Differenz des Spannungspotentials kleiner als die erste Potentialdifferenz ist.

33. Das System (100) nach Anspruch 32, in dem darüber hinaus der Controller (124) zum Applizieren der dritten Differenz des Spannungspotentials zwischen der ausgewählten Reihe und der ausgewählten Spalte, zwischen denen vorher die zweite Spannung appliziert wurde, konfiguriert ist, und zwar so, dass die flüssigkristalline Schicht (408), die benachbart zur Schnittstelle der ausgewählten Reihe und der ausgewählten Spalte anliegt, einer Veränderung von einer blockierenden zur durchlässigen Schicht für einen entsprechenden Teil des ausströmenden Lichts unterliegt, wobei die dritte Differenz des Spannungspotentials kleiner als die zweite Potentialdifferenz ist.

34. Das System (100) nach Anspruch 33, in dem darüber hinaus der Controller (124) zum Applizieren der vierten Differenz des Spannungspotentials zwischen der ausgewählten Reihe und der ausgewählten Spalte, zwischen denen vorher die dritte Spannung appliziert wurde, konfiguriert ist, und zwar so, dass die flüssigkristalline Schicht (408), die benachbart zur Schnittstelle der ausgewählten Reihe und der ausgewählten Spalte anliegt, zum Blockieren von einem entsprechenden Teil des ausströmenden Lichts konfiguriert bleibt, wobei die zweite Differenz des Spannungspotentials größer als die dritte Potentialdifferenz ist.

35. Das System (100) nach Anspruch 34, in dem die flüssigkristalline Schicht (408) ein bistabiles Material ist.

36. Das System (100) nach Anspruch 1, in dem:
das Plattenpaar (202, 210) eine solche Größe hat, die das Abdecken der Apertur des ausströmenden Lichts ermöglicht und die Platten (202, 210) parallel zueinander aufgestellt sind,
die Schichten (402, 404) des zweiten Materials die erste Schicht ITO (aus Indiumoxid und Zinn) (402), deponiert auf der ersten Platte (202), wobei die erste Schicht ITO (402) in die Gruppe der ersten Gebiete längs der ersten Richtung und die zweite Schicht (404), deponiert auf der zweiten der Platten (210), enthalten, wo die erste und zweite Schicht ITO (402, 404) zwischen den Platten (202, 210) angebracht sind; sowie die zweite Schicht ITO (404) in die Gruppe der ersten Gebiete längs der zweiten Richtung, die sich von der ersten unterscheidet, eingeteilt ist; sowie
das dritte Material eine flüssigkristalline Schicht (408) enthält, die sich zwischen der ersten Schicht ITO (402) und der zweiten Gruppe der Gebiete der Schicht ITO (404) befindet, wobei die flüssigkristalline Schicht aus einem bistabilen Material geformt ist;
wo das System darüber hinaus einen konfigurierten Controller (124) zum selektiven Applizieren der Differenz der Spannungspotentiale zwischen mindestens einem Paar der ersten und zweiten Gebiete ITO (402, 404) enthält, und zwar so, dass das benachbarte Gebiet der flüssigkristallinen Schicht (408) für die Übertragung oder Blockierung eines oder mehrerer der ersten Teile des ausströmenden Lichts konfiguriert ist.

37. Das System (100) nach Anspruch 38, in dem das flüssigkristalline Material (408) grundsätzlich ultraviolettes Licht überträgt.

38. Das System (100) nach Anspruch 37, in dem das flüssigkristalline Material (408) ein stabilisiertes, flüssigkristallines Polymerstoff ist.

39. Das System (100) nach einem der vorhergehenden Ansprüche 36 bis 38, in dem das Plattenpaar (202, 210) aus UV-durchlässigem Glas formiert ist (UV grade glass).

40. Das System (100) nach beliebigen der vorhergehenden Ansprüche 36 bis 39, in dem die erste und zweite Schicht ITO (402, 404) eine solche Dicke haben, dass der Oberflächenwiderstand zwischen ungefähr 100 und 300 Ω/Quadrat beträgt.

41. Das System (100) nach einem der vorhergehenden Ansprüche 36 bis 40, in dem die Differenz des Spannungspotentials größer als der definierte Schwellwert ist und in dem die benachbarten Gebiete der flüssigkristallinen Schicht (206) eine Übertragung dann ermöglichen, wenn die angelegte Differenz der Spannungspotentiale größer als der definierte Schwellwert ist.

42. Das System (100) nach einem der vorhergehenden Ansprüche 36 bis 40, in dem die Differenz des Spannungspotentials kleiner als der definierte Schwellwert ist und in dem die benachbarten Gebiete der flüssigkristallinen Schicht (206) eine Übertragung dann ermöglichen, wenn die angelegte Differenz der Spannungspotentiale kleiner als der definierte Schwellwert ist.

43. Nachweismethode für Anomalien auf der Probe (105), die folgende Schritte enthält:
das einfallende Lichtbündel (104) auf die Probe (105) richten, wobei das einfallende Lichtbündel (104) eine Wellenlänge zwischen ungefähr 340 und 400 Nanometern hat;
selektives Blockieren von mindestens eines räumlichen Teiles des ausströmenden Lichts durch das auf die Probe (105) einfallende Lichtbündel (104), bevor es zum in der Bildebene des ausströmenden Lichts angebrachten Detektor (122) gelangt, wobei die Blockierung durch das Konfigurieren des programmierbaren Raumfilters erreicht wird (PSF - programmable spatial filter) (114); sowie
Durchlassen von einer oder mehreren Teilen des ausströmenden Lichtbündels durch den PSF (114) bis zum Detektor (122);
wobei der erste räumliche Teil (oder Teile) einen minimalen Wert des Auslöschungskoeffizienten von ungefähr 500:1 und der zweite räumliche Teil oder Teile einen minimalen Übertragungswert von ungefähr 50% haben für der Wellenlänge das einfallende Lichtbündel (104);
wobei der PSF (114) folgendes enthält: ein Plattenpaar (202, 210), hergestellt aus dem ersten Material des prinzipiell übertragenden UV-Lichtes, Schichten (204, 208, 402, 404) des zweiten Materials, die ein oder mehrere auf jeder der Plattenpaare (202, 210) abgelagerte Gebiete bilden, wobei das zweite Material leitend ist und UV-Licht überträgt; und das dritte Material (206) zwischen den Schichten (204, 208, 402, 404) des zweiten Materials, das selektiv konfigurierbar ist, um eine kompatible Übertragung des UV-Lichtes und das Auftreten von Undurchsichtigkeiten zu sichern; dagegen ist jedes der Gebiete der Schichten (204, 208, 402, 404) vom zweiten Material mit einem Mechanismus zum selektiven Applizieren des Spannungspotentials gekoppelt,
und zwar so, dass, wenn die festgestellte Spannungsdifferenz auf den Gegenseiten des dritten Materials (206) zwischen den Gebieten des zweiten Materials zur Anwendung kommt, dann wird das dritte Material (206) undurchsichtig oder transparent.

44. Verfahren nach Anspruch 43, in welchem der erste räumliche Teil (oder Teile), der, bevor er zum Detektor (122) gelangt, blockiert und so ausgewählt wird, dass er dem ausströmenden Licht entspricht, welches das Ergebnis der sich auf der Probe (105) wiederholenden Muster ist.

45. Verfahren nach Anspruch 44, in dem der erste räumliche Teil (oder Teile) so ausgewählt wird, dass er einem oder mehreren scharfen und klaren Diffraktionspunkt entspricht, der das Ergebnis sich auf der Probe (105) wiederholender Muster ist.

46. Verfahren nach Anspruch 44, in dem der erste räumliche Teil (oder Teile) so ausgewählt wird, dass er einer oder mehreren Regionen in einem oder mehr ausgewählten Winkel entspricht, der das Ergebnis sich auf der Probe (105) wiederholender Muster ist.

47. Verfahren nach Anspruch 46, in welcher der gewählte Winkel einen Winkel von 45° zur Fallebene enthält.

48. Verfahren nach Anspruch 46, in welcher der gewählte Winkel einen Winkel von 90° zur Fallebene enthält.

49. Verfahren nach Anspruch 43, bei dem das Blockieren und Durchlassen in der Fourier-Ebene des ausströmenden Lichts erfolgt.

50. Verfahren nach Anspruch 43, bei welcher der erste räumliche Teil durch die Applikation der ersten Differenz des Spannungspotentials zwischen der ersten Reihe und ersten Spalte des programmierbaren Raumfilters (PSF) (114), der viele adressierbare Reihen und Spalten enthält, durchgelassen wird.

51. Verfahren nach Anspruch 50, die darüber hinaus die Übertragung des ersten räumlichen Teiles des Lichtes stützt, die durch die Applikation der zweiten Differenz des Spannungspotentials zwischen der ersten Reihe und der ersten Spalte erfolgt, wobei die zweite Differenz des Spannungspotentials kleiner als die erste Differenz des Spannungspotentials ist.

52. Verfahren nach Anspruch 51, die darüber hinaus die Blockierung des ersten räumlichen Teiles des durch den PSF (114) ausströmenden Lichts enthält, und zwar bevor es zum Detektor (122) gelangt, durch die Applikation der dritten Differenz des Spannungspotentials zur ersten Reihe und ersten Spalte erfolgt, wobei die dritte Differenz des Spannungspotentials kleiner als die zweite Differenz des Spannungspotentials ist.

53. Verfahren nach Anspruch 52, die darüber hinaus die Blockierung des ersten räumlichen Teiles des Lichtes stützt, die durch die Applikation der zweiten Differenz des Spannungspotentials zwischen der ersten Reihe und der ersten Spalte erfolgt.

54. Verfahren nach einem der vorhergehenden Ansprüche 51-53, bei der die Blockierung des zweiten räumlichen Teiles des durch den PSF (114) ausströmenden Lichts erfolgt, und zwar bevor es zum Detektor (122) gelangt, durch die Applikation der dritten Differenz des Spannungspotentials zur ersten Reihe und ersten Spalte erfolgt, wobei die zweite Differenz des Spannungspotentials kleiner als die erste Differenz des Spannungspotentials ist.

55. Verfahren nach Anspruch 54, bei dem die zweite Differenz des Spannungspotentials kleiner als die erste Differenz des Spannungspotentials ist, und zwar um einen festgelegten Wert, wenn der zweite räumliche Teil des ausströmenden Lichts vorher durch den PSF (114) blockiert war.

56. Verfahren nach Anspruch 54, bei dem die zweite Differenz des Spannungspotentials kleiner als die erste Differenz des Spannungspotentials ist, und zwar um zweiten festgelegten Wert, der größer als der erste festgelegte Wert ist, wenn der zweite räumliche Teil des ausströmenden Lichts vorher vom PSF (114) durchgelassen wurde.

## Revendications

1. Système d'inspection optique (100) pour détecter anomalies sur un échantillon (105) comprenant:
une source de lumière (102) pour diriger un faisceau de lumière incidente (104) sur un échantillon (105);
un filtre spatial programmable (PSF) (114) disposé dans un chemin de la lumière émanant de l'échantillon (105) en réponse au faisceau de lumière incidente (104), le filtre spatial programmable (PSF) (114) étant construit à partir de matériaux agencés pour inhiber au moins une première partie de la lumière émanant avec une valeur d'extinction minimale d'environ 400 :1 et
pour transmettre au moins une seconde partie de la lumière émanant avec une valeur de transmission minimale d'environ 40 pour cent pour un faisceau de lumière incidente (104) ayant une longueur d'onde comprise entre environ 340 nanomètres et environ 400 nanomètres;
un détecteur (122) disposé dans le chemin de la lumière émanant de sorte que la seconde partie de la lumière émanant qui est transmise par le filtre spatial programmable (PSF) (114) tombe sur le détecteur (122) pour former ainsi une image d'au moins une portion de l'échantillon (105); et
un analyseur (124) destiné à recevoir l'image et à déterminer l'existence des défauts présents sur la portion de l'échantillon en analysant l'image reçue;
dans lequel le filtre spatial programmable (PSF) (114) comprend une paire de plaques (202, 210) formées à partir d'un premier matériau qui transmet sensiblement la lumière UV, des couches (204, 208, 402, 404) d'un deuxième matériau formant une ou plusieurs portions déposées sur chacune des plaques (202, 210), ledit deuxième matériau étant conducteur et transmet la lumière UV, et un troisième matériau (206) entre les couches (204, 208, 402, 404) du deuxième matériau qui est sélectivement configurable pour fournir une transmission compatible d'UV et rendement d'opacité, chacune des portions des couches (204, 208, 402, 404) du deuxième matériau étant couplée à un mécanisme pour appliquer sélectivement un potentiel de tension, de telle sorte qu'au moment où une différence de tension prédéterminée est appliquée à travers le troisième matériau (206) entre les portions du deuxième matériau, le troisième matériau (206) devient opaque ou transparent.

2. Système (100) tel que décrit dans la revendication 1, dans lequel le filtre spatial programmable (PSF) (114) est configurable pour inhiber au moins une première partie de la lumière émanant avec la valeur d'extinction étant d'environ 500:1 et pour transmettre au moins une seconde partie de la lumière émanant avec la valeur de transmission minimale étant d'environ 50 pour cent.

3. Système (100) tel qu'il est reçu dans la revendication 1 ou 2, dans lequel :
les deux plaques (202, 210) sont dimensionnées pour couvrir une ouverture de la lumière émanant, les plaques étant disposées parallèlement l'une à l'autre;
les couches (204, 208) du deuxième matériau comprennent une première couche d'oxyde d'indium-étain (ITO) (204) déposée sur la première des plaques (202), et une pluralité de portions de la seconde couche d'ITO (208a-208i) déposée sur la deuxième des plaques (210) où la première couche d'ITO (204) et les portions de la seconde couche d'ITO (208a - 208i) sont positionnées entre les plaques (202, 210); et
le troisième matériau (206) comprend une couche à cristaux liquides (206) disposée entre la première couche d'ITO (204) et les portions de la seconde couche d'ITO (208a - 208i).

4. Système (100) tel que décrit dans la revendication 3, dans lequel l'analyseur (124) est en outre configuré pour appliquer sélectivement une différence de potentiel de tension entre au moins l'une des portions de la seconde couche d'ITO (208a - 208i) et la première couche d'ITO (204) de sorte qu'une portion adjacente de la couche à cristaux liquides (206) permet la transmission d'une première partie de la lumière émanant au moment où une autre portion de la couche à cristaux liquides (206) sur laquelle une différence de potentiel de tension n'est pas appliquée inhibe une seconde partie de la lumière émanant à travers le filtre spatial programmable (PSF).

5. Système (100) tel que décrit dans la revendication 4, dans lequel la différence de potentiel de tension est supérieure à un seuil prédéterminé, et dans lequel la portion adjacente de la couche à cristaux liquides (206) permet la transmission au moment où une différence de potentiel de tension qui est supérieure au seuil prédéterminé est appliquée.

6. Système (100) tel que décrit dans la revendication 4, dans lequel la différence de potentiel de tension est inférieure à un seuil prédéterminé, et dans lequel la portion adjacente de la couche à cristaux liquides (206) permet la transmission au moment où une différence de potentiel de tension qui est inférieure au seuil prédéterminé est appliquée.

7. Système (100) tel que décrit dans quelconque des revendications 3-6, dans lequel le matériau à cristaux liquides (206) transmet sensiblement la lumière UV.

8. Système (100) tel que décrit dans la revendication 7, dans lequel le matériau à cristaux liquides (206) est un matériau à cristaux liquides stabilisé par un polymère.

9. Système (100) tel que décrit dans quelconque des revendications 3-8, dans lequel les plaques (202, 210) sont formées à partir de verre de qualité UV.

10. Système (100) tel que décrit dans quelconque des revendications 3-9, dans lequel la première et la seconde couche d'ITO (204, 208) ont une telle valeur d'épaisseur pour aboutir à une résistance superficielle comprise entre environ 100 et environ 300 Ω par carré.

11. Système (100) tel que décrit dans quelconque des revendications 3-10, dans lequel la pluralité de portions de la seconde couche d'ITO (208a - 208i) est distribuée dans une première direction.

12. Système (100) tel que décrit dans la revendication 11, dans lequel l'analyseur (124) est en outre configuré pour déterminer laquelle ou lesquelles portions de bruit de la lumière émanant résultent de répétition des motifs sur l'échantillon (105), où la différence de potentiel de tension est appliquée de manière sélective pour inhiber de telles portions de bruit.

13. Système (100) tel que décrit dans la revendication 12, dans lequel les portions de bruit (ou la portion de bruit) correspondent à une ou plusieurs nettes et lumineuses taches de diffraction qui résultent de répétition de motifs sur l'échantillon (105).

14. Système (100) tel que décrit dans les revendications 12 ou 13, dans lequel les portions de bruit (ou la portion de bruit) de la lumière émanant correspondent à une ou plusieurs régions à un angle sélectionné (ou à plusieurs angles sélectionnés) qui résultent de répétition de lignes sur l'échantillon (105).

15. Système (100) tel que décrit dans la revendication 14, dans lequel l'angle sélectionné comprend 45 degrés par rapport à un plan d'incidence.

16. Système (100) tel que décrit dans la revendication 14, dans lequel l'angle sélectionné comprend 90 degrés par rapport à un plan d'incidence.

17. Système (100) tel que décrit dans quelconque des revendications 1-16, dans lequel le filtre spatial programmable (PSF) (114) est positionné dans un plan de transformation de Fourier de la lumière émanant et le détecteur (122) est positionné dans un plan d'image de la lumière émanant.

18. Système (100) tel que décrit dans quelconque des revendications 1-16, dans lequel la lumière émanant est la lumière dispersée, par opposition à la lumière réfléchie.

19. Système (100) tel que décrit dans la revendication 8 lorsqu'elle dépend de la revendication 4, dans lequel le filtre spatial programmable (PSF) (114) est positionné dans un plan de transformation de Fourier de la lumière émanant et le détecteur (122) est positionné dans un plan d'image de la lumière émanant.

20. Système (100) tel que décrit dans la revendication 8 lorsqu'elle dépend de la revendication 4, dans lequel le premier potentiel de tension est supérieur à un premier seuil prédéterminé, dans lequel l'analyseur (124) est en outre configuré pour appliquer une deuxième différence de potentiel entre l'autre portion de la couche à cristaux liquides (206) sur laquelle la première différence de potentiel de tension n'est pas appliquée, et où la deuxième différence de potentiel de tension est inférieure au premier seuil prédéterminé.

21. Système (100) tel que décrit dans la revendication 8 lorsqu'elle dépend de la revendication 4, dans lequel le premier potentiel de tension permet la transmission lorsqu'il est inférieur à un premier seuil prédéterminé, dans lequel l'analyseur (124) est en outre configuré pour appliquer une deuxième différence de potentiel entre l'autre portion de la couche à cristaux liquides (208) sur laquelle la première différence de potentiel de tension n'est pas appliquée, et où la deuxième différence de potentiel de tension est supérieure au premier seuil prédéterminé.

22. Système (100) tel que décrit dans la revendication 1, dans lequel la partie sélectionnée de la lumière émanant inhibée ou transmise par le filtre spatial programmable (PSF) (114) peut être sélectionnée dans une pluralité de parties de lumière émanant disposées le long d'une première direction, ainsi que dans une seconde direction, la première direction étant différente de la seconde direction.

23. Système (100) tel que décrit dans la revendication 22, dans lequel la première direction est perpendiculaire à la seconde direction.

24. Système (100) tel que décrit dans les revendications 22 ou 23, dans lequel le filtre spatial programmable (PSF) (114) est disposé pour faciliter l'inhibition des parties de la lumière émanant à un angle particulier qui résultent de motifs sur l'échantillon (105).

25. Système (100) tel que décrit dans quelconque des revendications 22-24, dans lequel l'angle est de 45 degrés par rapport à un plan d'incidence.

26. Système (100) tel que décrit dans quelconque des revendications 22-24, dans lequel l'angle est de 90 degrés par rapport à un plan d'incidence.

27. Système (100) tel que défini dans quelconque des revendications 22-26, dans lequel :
les deux plaques (202, 210) sont dimensionnées pour couvrir une ouverture de la lumière émanant, les plaques (202, 210) étant disposées parallèlement l'une à l'autre;
les couches (402, 404) du deuxième matériau comprennent une première couche d'oxyde d'indium-étain (ITO) déposée sur la première des plaques (202) et une seconde couche d'ITO déposée sur la seconde des plaques (210), où la première et la seconde couche d'ITO (402, 404) sont positionnées entre les plaques (202, 210), et où la première et/ou la seconde couche d'ITO (402, 404) est divisée en portions le long de la première et la seconde direction, et
le troisième matériau comprend une couche à cristaux liquides (206) disposée entre la première couche d'ITO (402) et les portions de la seconde couche d'ITO (404).

28. Système (100) tel que décrit dans la revendication 27, dans lequel la première couche d'ITO (402) est divisée en portions et la seconde couche (404) ne l'est pas, le système comprenant en outre un contrôleur (124) configuré pour appliquer sélectivement une différence de potentiel de tension entre au moins l'une des portions de la première couche d'ITO (402) et la seconde couche d'ITO (404) de sorte qu'une portion adjacente de la couche à cristaux liquides (206) permet la transmission d'une première partie de la lumière émanant au moment où une autre portion de la couche à cristaux liquides (206) sur laquelle une différence de potentiel de tension n'est pas appliquée inhibe une seconde partie de la lumière émanant à travers le filtre spatial programmable (PSF).

29. Système (100) tel que décrit dans la revendication 28, dans lequel la différence de potentiel de tension est supérieure à un seuil prédéterminé, et dans lequel la portion adjacente de la couche à cristaux liquides (206) permet la transmission au moment où une différence de potentiel de tension, qui est supérieure au seuil prédéterminé est appliquée.

30. Système (100) tel que décrit dans la revendication 28, dans lequel la différence de potentiel de tension est inférieure à un seuil prédéterminé, et dans lequel la portion adjacente de la couche à cristaux liquides (206) permet la transmission au moment où une différence de potentiel de tension, qui est inférieure au seuil prédéterminé est appliquée.

31. Système (100) tel que défini dans la revendication 27, dans lequel la première couche d'ITO (402) est divisée en pluralité de portions qui sont disposées en pluralité de rangées et la seconde couche d'ITO (404) est divisée en pluralité de colonnes, le système comprenant un contrôleur (124) configuré pour appliquer une première différence de potentiel de tension entre une rangée sélectionnée et une colonne sélectionnée de sorte qu'une portion de la couche à cristaux liquides (408) qui est adjacente à l'intersection de la rangée et de la colonne sélectionnées change d'être configurée pour inhiber à être configurée pour transmettre une partie correspondante de la lumière émanant.

32. Système (100) tel que décrit dans la revendication 31, dans lequel le contrôleur (124) est en outre configuré pour appliquer une deuxième différence de potentiel de tension entre la rangée sélectionnée et la colonne sélectionnée qui avaient auparavant une première tension y appliquée de sorte que la portion de la couche à cristaux liquides (408) qui est adjacente à l'intersection de la rangée et de la colonne sélectionnées reste configurée pour transmettre la partie correspondante de la lumière émanant, où la deuxième différence de potentiel est plus faible que la première différence de potentiel.

33. Système (100) tel que décrit dans la revendication 32, dans lequel le contrôleur (124) est en outre configuré pour permettre une troisième différence de potentiel de tension entre la rangée sélectionnée et la colonne sélectionnée qui avaient auparavant une deuxième tension y appliquée de sorte que la portion de la couche à cristaux liquides (408) qui est adjacente à l'intersection de la rangée et de la colonne sélectionnées change d'être configurée pour transmettre à être configurée pour inhiber la partie correspondante de la lumière émanant où la troisième différence de potentiel est plus faible que la deuxième différence de potentiel.

34. Système (100) tel que décrit dans la revendication 33, dans lequel le contrôleur (124) est en outre configuré pour permettre une quatrième différence de potentiel de tension entre la rangée sélectionnée et la colonne sélectionnée qui avaient auparavant une troisième tension y appliquée de sorte que la portion de la couche à cristaux liquides (408) qui est adjacente à l'intersection de la rangée et de la colonne sélectionnées reste configurée pour inhiber la partie correspondante de la lumière émanant où la quatrième différence de potentiel est plus élevée que la troisième différence de potentiel.

35. Système (100) tel que décrit dans la revendication 34, dans lequel la couche à cristaux liquides (408) est un matériau bi-stable.

36. Système (100) tel que décrit dans la revendication 1, dans lequel :
les deux plaques (202, 210) sont dimensionnées pour couvrir une ouverture de la lumière émanant, les plaques (202, 210) étant disposées parallèlement l'une à l'autre;
les couches (402, 404) du deuxième matériau comprennent une première couche (402) d'oxyde d'indium-étain (ITO) déposée sur la première des plaques (202), la première couche d'ITO (402) étant divisée en pluralité de premières portions le long d'une première direction et une seconde couche d'ITO (404) déposée sur la seconde des plaques (210), où la première et la seconde couche d'ITO (402, 404) sont positionnées entre les plaques (202, 210), la seconde couche d'ITO (404) étant divisée en pluralité de premières portions le long d'une seconde direction qui diffère de la première direction;
le troisième matériau comprend une couche à cristaux liquides (408) disposée entre la première couche d'ITO (402) et portions de la seconde couche d'ITO (404), la couche à cristaux liquides (408) étant formée d'un matériau bi-stable;
dans lequel le système comprend en outre un contrôleur (124) configuré pour appliquer de manière sélective une différence de potentiel de tension entre au moins une paire de portions de la première et seconde couche d'ITO (402, 404) de sorte qu'une portion adjacente de la couche à cristaux liquides (408) est configurée pour inhiber ou transmettre une ou plus de premières parties de la lumière émanant.

37. Système (100) tel que décrit dans la revendication 38, dans lequel le cristal liquide (408) transmet sensiblement la lumière UV.

38. Système (100) tel que décrit dans la revendication 37, dans lequel le cristal liquide (408) est un matériau à cristaux liquides stabilisé par un polymère.

39. Système (100) tel que décrit dans quelconque des revendications 36-38, dans lequel la paire de plaques (202, 210) est formée à partir de verre de qualité UV.

40. Système (100) tel que décrit dans quelconque des revendications 36-39, dans lequel la première et la seconde couche d'ITO (402, 404) ont une telle valeur d'épaisseur pour résulter entre environ 100 et environ 300 Ω par carré.

41. Système (100) tel que décrit dans quelconque des revendications 36-40, dans lequel la différence de potentiel de tension est supérieure à un seuil prédéterminé, et dans lequel la portion adjacente de la couche à cristaux liquides (206) permet la transmission au moment où une différence de potentiel de tension qui est supérieure au seuil prédéterminé est appliquée.

42. Système (100) tel que décrit dans quelconque des revendications 36-40, dans lequel la différence de potentiel de tension est inférieure à un seuil prédéterminé, et dans lequel la portion adjacente de la couche à cristaux liquides (206) permet la transmission au moment où une différence de potentiel de tension qui est inférieure au seuil prédéterminé est appliquée.

43. Procédé de détection d'anomalies sur un échantillon (105) le procédé comprenant:
direction d'un faisceau de lumière incidente (104) sur un échantillon (105), le faisceau de lumière incidente (104) ayant une longueur d'onde comprise entre environ 340 nanomètres et environ 400 nanomètres;
inhibition sélective d'au moins une première partie spatiale d'un faisceau de lumière émanant, qui résulte du faisceau de lumière incidente (104) frappant l'échantillon (105), d'atteindre le détecteur (122) positionné à l'intérieur d'un plan d'image de tel faisceau de lumière émanant, l'inhibition étant accomplie par la configuration d'un filtre spatial programmable (PSF) (114); et transmission d'une ou plusieurs secondes parties spatiales du faisceau de lumière émanant à travers le filtre spatial programmable (PSF) (114) au détecteur (122);
dans lequel la première partie spatiale (ou les premières parties spatiales) a une valeur d'extinction minimale d'environ 500:1 et la seconde partie spatiale (ou les secondes parties spatiales) a une valeur de transmission minimale d'environ 50 pour cent (pour la longueur d'onde du faisceau de lumière incidente), et
dans lequel le filtre spatial programmable (PSF) (114) comprend une paire de plaques (202, 210) formées à partir d'un premier matériau qui transmet sensiblement la lumière UV, des couches (204, 208, 402, 404) d'un deuxième matériau formant une ou plusieurs portions déposées sur chacune des plaques (202, 210), ledit deuxième matériau étant conducteur et transmet la lumière UV, et un troisième matériau (206) entre les couches (204, 208, 402, 404) du deuxième matériau qui est sélectivement configurable pour fournir une transmission compatible d'UV et rendement d'opacité, chacune des portions des couches (204, 208, 402, 404) du deuxième matériau étant couplée à un mécanisme pour appliquer sélectivement un potentiel de tension, de telle sorte qu'au moment où une différence de tension prédéterminée est appliquée à travers le troisième matériau (206) qui se trouve entre les portions du deuxième matériau, le troisième matériau (206) devient opaque ou transparent.

44. Procédé tel que décrit dans la revendication 43, dans lequel les premières parties spatiales (ou la première partie spatiale) qui sont inhibées d'atteindre le détecteur (122) elles sont sélectionnées pour correspondre à la lumière émanant résultant de répétition des motifs sur l'échantillon (105).

45. Procédé tel que décrit dans la revendication 44, dans lequel les premières parties spatiales (ou la première partie spatiale) sont sélectionnées pour correspondre à une ou plusieurs nettes et lumineuses taches de diffraction qui résultent de répétition des motifs sur l'échantillon (105).

46. Procédé tel que décrit dans la revendication 44, dans lequel les premières parties spatiales (ou la première partie spatiale) sont sélectionnées pour correspondre à une ou plusieurs régions à un angle sélectionné (ou à plusieurs angles sélectionnés) qui résultent de répétition des lignes sur l'échantillon (105).

47. Procédé tel que décrit dans la revendication 46, dans lequel les angles sélectionnés (ou l'angle sélectionné) comprennent 45 degrés par rapport à un plan d'incidence.

48. Procédé tel que décrit dans la revendication 46, dans lequel les angles sélectionnés (ou l'angle sélectionné) comprennent 90 degrés par rapport à un plan d'incidence.

49. Procédé tel que décrit dans la revendication 43, dans lequel l'inhibition et la transmission sont éffectuées dans un plan de transformation de Fourier de la lumière émanant.

50. Procédé tel que décrit dans la revendication 43, dans lequel une première partie spatiale est transmise par application d'une première différence de potentiel de tension entre une première rangée et une première colonne d'un filtre spatial programmable (PSF) (114) ayant une pluralité de rangées et de colonnes adressables.

51. Procédé tel que décrit dans la revendication 50, comprenant en outre le maintien de la transmission de la première partie spatiale de la lumière émanant par application d'une deuxième différence de potentiel de tension entre la première rangée et la première colonne, la deuxième différence de tension étant plus faible que la première différence de potentiel de tension.

52. Procédé tel que décrit dans la revendication 51, comprenant en outre l'inhibition de la première partie spatiale de la lumière émanant à travers le filtre spatial programmable (PSF) (114) d'atteindre le détecteur (122) par application d'une troisième différence de potentiel de tension à la première rangée et la première colonne, où la troisième différence de potentiel de tension est plus faible que la deuxième différence de potentiel de tension.

53. Procédé tel que décrit dans la revendication 52, comprenant en outre le maintien de l'inhibition de la première partie spatiale de la lumière émanant par application de la deuxième différence de potentiel de tension entre la première rangée et la première colonne.

54. Procédé tel que décrit dans quelconque des revendications 51-53, dans lequel l'inhibition de la seconde partie spatiale du faisceau de lumière émanant d'atteindre le filtre spatial programmable (PSF) (114) le détecteur (122) est accomplie par application d'un deuxième potentiel de tension à une seconde rangée et une seconde colonne, la deuxième tension étant plus faible que la première tension.

55. Procédé tel que décrit dans la revendication 54, dans lequel la deuxième tension est inférieure à la première tension d'une quantité prédéterminée au moment où la seconde partie spatiale de la lumière émanant a été précédemment inhibée de passer à travers le filtre spatial programmable (PSF) (114).

56. Procédé tel que décrit dans la revendication 54, dans lequel la deuxième tension est inférieure à la première tension d'une deuxième quantité prédéterminée qui est plus grande que la première quantité prédéterminée au moment où la seconde partie spatiale de la lumière émanant a été précédemment transmise à travers le filtre spatial programmable (PSF) (114).
